# FASCICULE DE BREVET EUROPEEN

(11) **EP 2 820 086 B1**
(45) Date de publication et mention de la délivrance du brevet: **14.09.2016**
(21) Numéro de dépôt: 13712855.9
(22) Date de dépôt: 27.02.2013
(51) Int. Cl.: C08L 77/06, E04B 1/66, E04D 12/00, E04B 1/62, C08L 29/04

(54) **MEMBRANE PARE-VAPEUR A BASE DE MELANGE PA666/EVOH**
DAMPFSPERRSCHICHTMEMBRAN AUF BASIS EINER PA666/EVOH-MISCHUNG
VAPOUR-BARRIER MEMBRANE BASED ON A PA666/EVOH BLEND

(30) Priorité: 28.02.2012 FR 1251773
(43) Date de publication de la demande: 07.01.2015
(73) Titulaire: Saint-Gobain Isover, 92400 Courbevoie (FR)
(72) Inventeur: KHARIWALA, Devang, Marlborough, Massachusetts 01752 (US); MASSARA, Valerio, I-27050 Redavalle (IT)
(74) Mandataire: Pöpping, Barbara
(86) Numéro de dépôt international: PCT/FR2013/050395
(87) Numéro de publication internationale: WO 2013/128114

(56) Documents cités:
- WO-A1-2011/069672
- US-A1- 2010 203 790

## Description

La présente invention concerne une membrane pare-vapeur à base d'un mélange homogène d'un copolyamide particulier et d'un copolymère éthylène-alcool vinylique.

On connaît depuis de nombreuses années des membranes pare-vapeur dont la perméabilité à la vapeur d'eau varie en fonction de l'humidité de l'air. Pour les raisons expliquées par exemple dans la demande WO96/33321, on cherche à obtenir des membranes qui laissent passer facilement la vapeur d'eau lorsque l'humidité relative (HR) est élevée (80% à 100 % de HR) et qui la bloquent efficacement à faible taux d'humidité relative (50 % de HR et moins).

De telles membranes pare-vapeur « intelligentes » (*smart vapor retarder membranes*) sont caractérisées par la « perméance » à la vapeur d'eau, mesurée selon la norme ASTM E 96 et exprimée en perms.

Il est également courant d'exprimer la résistance d'une membrane à la diffusion de la vapeur d'eau sous la forme de l'épaisseur d'une couche d'air possédant la même perméance que la membrane considérée. Cette épaisseur est exprimée en mètres et appelée « épaisseur d'air équivalente » (S_{d}).

Une membrane pare-vapeur est généralement considérée comme étant d'autant plus intéressante et performante que sa S_{d} est élevée à faible humidité relative et faible à forte humidité relative. Par ailleurs, les professionnels du bâtiment souhaitent généralement que la S_{d} varie brusquement sur un domaine étroit d'humidité relative. Enfin, lorsque la membrane doit être utilisée dans des conditions particulièrement sévères, par exemple dans des climats comportant de longues périodes froides relativement humides et seulement de courtes périodes chaudes, il est souhaitable de disposer de membranes pour lesquelles la variation de la S_{d} s'effectue de façon abrupte à des taux d'humidité relative assez élevés, supérieurs à 65 %, de préférence supérieurs à 70 %, voire supérieurs à 75 %.

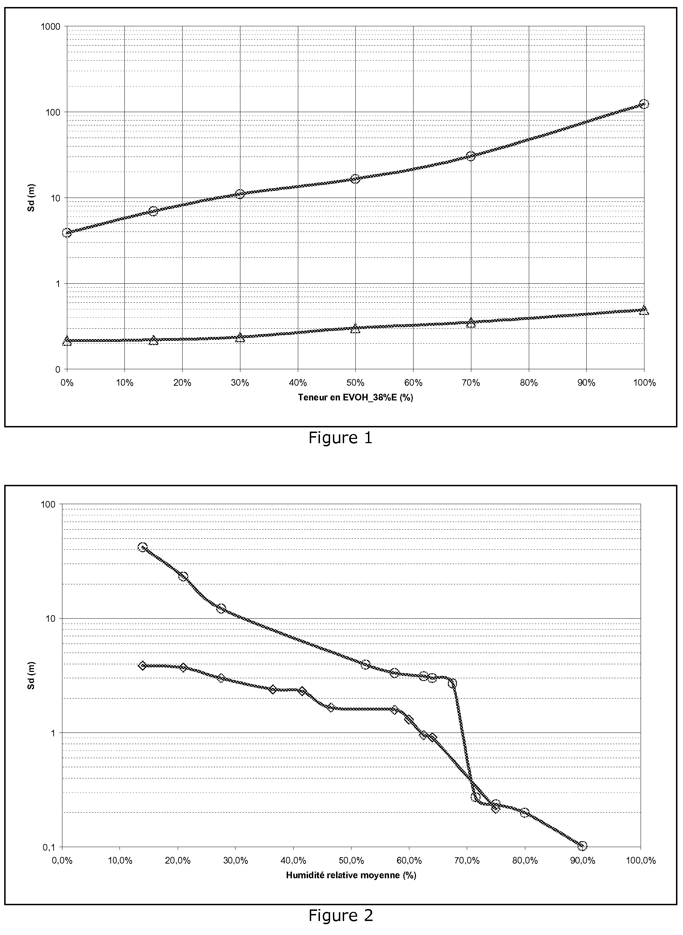

La Demanderesse commercialise depuis de nombreuses années des membranes pare-vapeur à base de polyamide 6 sous la dénomination commerciale de Vario KM et Vario KM Duplex. Ces membranes présentent une perméabilité à la vapeur d'eau dans des conditions humides totalement satisfaisantes. Leur résistance à la diffusion de la vapeur d'eau dans les conditions d'hiver lorsque l'air est sec et froid, pourrait toutefois être avantageusement augmentée en vue de l'utilisation dans des conditions climatiques plus sévères. Par ailleurs, comme le montre la figure 2, la variation de la S_{d} en fonction de l'humidité relative des membranes en PA6 (◇) est relativement progressive.

La Demanderesse s'était ainsi fixé pour objectif d'accroître la résistance à la diffusion de la vapeur d'eau des membranes en polyamide 6 dans des conditions de faible humidité tout en conservant une perméance élevée à forte HR.

Dans ses recherches visant à améliorer le comportement des membranes pare-vapeur en polyamide 6, la Demanderesse a notamment essayé de mélanger le PA6 avec de l'EVOH ayant une teneur en éthylène égale à 38 % en moles (voir WO2011/069672). Des tentatives de production de ces membranes à l'échelle industrielle ont toutefois fait apparaître des difficultés importantes : aux températures de mise en oeuvre relativement élevées, nécessaires pour obtenir une plasticité suffisante du polyamide 6, l'EVOH était soumis à une dégradation thermique et encrassait les installations de malaxage et d'extrusion.

Une autre approche a consisté à essayer de remplacer l'EVOH utilisé dans WO2011/069672, présentant une teneur en éthylène de 38 %, par un EVOH ayant une teneur en éthylène plus élevée ou moins élevée. La Demanderesse s'attendait en particulier à constater une amélioration de la compatibilité pour des teneurs en alcool vinylique plus élevées (teneurs en éthylène plus basses). Deux séries d'essais avec de l'EVOH contenant respectivement 27 % et 44 % en moles d'éthylène n'ont malheureusement pas été concluantes. Même pour de faibles teneurs en EVOH de 10 % et 15 % par rapport à la somme PA6+EVOH, les films se sont avérés difficiles voire impossible à fabriquer, présentaient de nombreux points de gel, de trous et/ou de défauts d'homogénéité.

Après ces échecs, la Demanderesse a essayé de remplacer, non pas l'EVOH, mais le PA6 par des polymères similaires, mais suffisamment différents pour permettre l'incorporation homogène de fractions importantes d'EVOH. En testant à cette occasion d'autres polyamides et notamment différents copolymères du PA6 elle a constaté que, de façon assez surprenante, le PA666, un copolymère statistique intermédiaire entre PA6 et le PA66, non seulement était compatible avec l'EVOH en toutes proportions, mais que les membranes pare-vapeur préparées à partir d'un mélange homogène d'EVOH et de PA666 présentaient une S_{d} significativement plus élevée en atmosphère sèche que les membranes de Vario KM à base de PA6 homopolymère. Cette augmentation de la S_{d} en atmosphère sèche (*dry cup*) n'était pas accompagnée d'une augmentation équivalente en atmosphère humide (*wet cup*) et la variation de la perméabilité à la vapeur d'eau se produisait de manière très avantageuse sur une gamme très étroite et assez élevée d'humidité relative.

La présente invention a par conséquent pour objet une membrane pare-vapeur, destinée à être utilisée pour améliorer l'étanchéité à l'air d'un bâtiment ou d'une pièce, comprenant au moins une couche active présentant une perméabilité à la vapeur d'eau qui augmente avec l'humidité relative environnante, ladite couche active comprenant au moins 90 % en poids d'un mélange de copolymère éthylène-alcool vinylique (EVOH) et de copolyamide 6-6.6 (PA666) ce dernier ayant une température de fusion inférieure à 210 °C, de préférence inférieure à 200 °C.

On entend par couche « active » dans la présente invention une couche continue, imperméable à l'eau liquide et à l'air, dont la perméance à la vapeur d'eau, mesurée selon la norme ASTM E 96, est au moins cinq fois plus importante à un taux moyen humidité relative de 75 % (*wet cup*) qu'à un taux moyen humidité relative de 25 % (*dry cup*).

Cette couche active comprend de préférence au moins 95 %, en particulier au moins 98 % en poids de mélange d'EVOH et de PA666, et peut même avantageusement être constituée exclusivement d'un tel mélange.

D'autres ingrédients tels que des agents plastifiants, des agents lubrifiants, des agents ignifugeants, des agents biocides ou biostatiques ou des fibres de renforcement, peuvent toutefois être présents à raison d'au plus 10 % en poids, de préférence d'au plus 5 % en poids et en particulier d'au plus 2 % en poids, rapporté au poids total de la ou des couches actives.

La ou les couches actives à base de mélange PA666/EVOH sont avantageusement les seules couches actives de la membrane qui ne comporte de préférence pas d'autres couches actives au sens défini ci-avant.

La couche active, ou l'ensemble des couches actives, présente avantageusement une épaisseur totale comprise entre 20 et 100 µm, de préférence entre 25 et 80 µm, en particulier entre 30 et 65 µm. De manière générale, l'augmentation de cette épaisseur se traduit par un accroissement de la résistance à la diffusion de la vapeur d'eau à la fois en milieu humide et en milieu sec, sans toutefois modifier l'allure générale de la courbe montrant la variation de la S_{d} en fonction du taux moyen d'humidité relative.

La ou les couches actives à base de mélange PA666/EVOH peuvent ne pas être les seules couches de la membrane pare-vapeur. Il peut en effet être intéressant voire, dans certains cas, nécessaire de doubler la ou les couches actives d'une couche de renfort ou de support, par exemple un textile de type filet ou non tissé, fixée sur un côté ou les deux côtés de la membrane ou pris en sandwich entre deux couches actives. Une telle couche de renfort ou de support, destinée à rester au contact de la couche active tout au long de la durée de vie de la membrane, doit bien entendu avoir une résistance à la diffusion de la vapeur d'eau négligeable par rapport à celle de la couche active.

On peut également envisager l'utilisation d'une ou deux couches de protection destinées à être enlevées, généralement par pelage, au moment de la pose de la membrane pare-vapeur. Ces couches de protection pelables peuvent être imperméables à l'eau et à la vapeur d'eau.

La couche active ou l'ensemble des couches actives représente de préférence au moins 40 % en poids, en particulier au moins 50 % en poids et idéalement au moins 60 % en poids voire plus de 80 % en poids de la membrane.

Comme expliqué en introduction, la Demanderesse a constaté que le PA666, au contraire du PA6 homopolymère, était miscible en toutes proportions avec l'EVOH, et que tous les mélanges préparés à partir de ces deux polymères permettaient de préparer aisément des membranes pare-vapeur minces, homogènes et transparentes ayant une perméance à la vapeur d'eau qui augmente avec le taux moyen d'humidité relative.

Le rapport en poids EVOH/PA666 est par conséquent compris avantageusement entre 10/90 et 90/10, de préférence entre 20/80 et 70/30, et en particulier entre 30/70 et 50/50. La limitation de la teneur en EVOH est intéressante non pas tant d'un point de vue technique que d'un point de vue du prix de revient des matières premières. L'EVOH est en effet plus cher que le PA666. Si cette situation devait changer à moyen terme, des mélanges présentant des rapports EVOH/PA666 compris entre 50/50 et 90/10, de préférence entre 60/40 et 80/20 pourraient devenir très intéressants à la fois d'un point de vue technique et économique.

La figure 1 montre l'évolution de la S_{d} en atmosphère humide (Δ ; wet *cup* ; HR moyenne 75%) et en atmosphère sèche (○ ; *dry cup* : HR moyenne 25%) d'une membrane pare-vapeur avec une couche active d'une épaisseur de 50 µm en fonction de la teneur en EVOH. L'EVOH utilisé est un produit commercialisé par la société Kuraray Co. Ltd. et présentant une teneur en éthylène de 38 % en moles.

On constate que la S_{d} en atmosphère sèche augmente de façon continue d'une valeur d'environ 4 m pour le PA666 pur à plus de 100 m pour l'EVOH pur. Par contre, en atmosphère humide, cette même valeur S_{d} n'augmente que de façon négligeable (de 0,2 m pour 100% PA666 à 0,5 m pour 100% EVOH). Autrement dit, le rapport S_{d sec} / S_{d} humide est d'autant plus grand et donc d'autant plus intéressant que la teneur en EVOH est importante.

Le PA666, ou PA6/66, ou PA6-6.6, ou nylon 666 (CAS n° 24993-04-2) est un copolymère cristallin statistique comportant des motifs PA6 dérivés d'ε-caprolactame ou d'acide aminocaproïque, et des motifs PA66 dérivés d'acide hexanedioïque (acide adipique) et d'hexaméthylènediamine ou d'adipate d'hexaméthylènediammonium. Son point de fusion doit être suffisamment bas pour permettre la préparation d'un mélange homogène avec l'EVOH à des températures où l'EVOH ne risque pas d'être dégradé thermiquement. Différents produits présentant des températures de fusion appropriées sont disponibles sur le marché. Ils ont tous une teneur en motifs PA6 supérieure à la teneur en motifs PA66. Le rapport molaire motifs PA6/motifs PA66 des copolyamides PA666 utilisés dans la présente invention est avantageusement compris entre 97/3 et 50/50, de préférence entre 95/5 et 55/45, en particulier entre 90/10 et 60/40.

On peut citer à titre d'exemples de PA666 disponibles sur le marché les produits Ultramid^{®} C33 01, Ultramid^{®} C33 LN 01 et Ultramid^{®} C4001 commercialisés par la société BASF, ou les produits UBE Nylon de la série 5000 (5024, 5033B, 5034B, 5024FDX57, 5033FDX27, 5033FDS, 5034FDX40, 5034FDX17, 5034MTX1) commercialisés par la société UBE.

De façon similaire, il existe sur le marché une large gamme de copolymères statistiques d'éthylène et d'alcool vinylique (CAS n° 26221-27-2), commercialisés par exemple par la société Kuraray sous la dénomination commerciale EVAL^{®}. La teneur en éthylène des EVOH utilisés dans la présente invention est de préférence comprise entre 20 et 50 % en poids, en particulier entre 25 et 45 % en poids. Des teneurs plus élevées en éthylène sont *a priori* moins intéressantes pour l'application en tant que membrane pare-vapeur car ils contiennent moins de liaisons hydrogène, dont on sait qu'elles sont essentielles pour l'obtention de bonnes propriétés pare-vapeur.

On peut citer à titre d'exemples les produits
- EVAL M (24 % en mole d'éthylène) ;
- EVAL L (27 % en moles d'éthylène) ;
- EVAL F, T ou J (32 % en mole d'éthylène) ;
- EVAL C (35 % en moles d'éthylène) ;
- EVAL H (38 % en mole d'éthylène) ;
- EVAL E (44 % en moles d'éthylène) ;
- EVAL G (48 % en moles d'éthylène)
tous commercialisés par la société Kuraray Co. Ltd. avant tout en tant que polymères présentant un excellent effet de barrière à la diffusion d'oxygène. Une gamme de produits similaires et tout aussi appropriés sont commercialisés sous la dénomination commerciale Soarnol^{®} par la société Nippon Gohsei.

La présente invention a également pour objet un procédé de fabrication des membranes décrites ci-avant comprenant la préparation d'un mélange homogène des deux polymères, suivi d'une étape de formage des membranes.

Plus précisément, le procédé de préparation des membranes pare-vapeur de la présente invention comprend les étapes successives suivantes :
- le chauffage et le malaxage, à une température comprise entre 200°C et 230°C, de préférence entre 205°C et 225 °C, d'EVOH et de PA666 jusqu'à obtention d'un mélange homogène de ces polymères, et
- le formage d'une membrane à partir du mélange homogène d'EVOH et de PA666 ainsi obtenu.

L'étape de chauffage et malaxage peut être mise en oeuvre de manière connue dans une extrudeuse.

L'étape de formage de la membrane se fait de préférence par extrusion, étirage mécanique, calandrage et/ou soufflage du mélange de polymères.

Les membranes pare-vapeur ainsi préparées, constituées uniquement de la couche active, peuvent ensuite être appliquées, par exemple sous pression et/ou chauffage, ou au moyen d'un adhésif approprié, sur les éventuelles couches de support ou de protection.

Les membranes pare-vapeur de la présente invention peuvent être utilisées exactement de la même manière que des membranes pare-vapeurs connues, par exemple les membranes Vario KM et Vario KM Duplex en PA6, pour améliorer l'étanchéité à l'air de bâtiments ou de pièces. Leurs propriétés de perméabilité à l'eau font qu'elles sont particulièrement bien adaptées pour des climats plus humides et plus froids que les climats modérés pour lesquels on utilise couramment les membranes en polyamide 6.

Lors de cette utilisation, les membranes sont appliquées généralement sur la face interne des parois du bâtiment ou de la pièce à étanchéifier. L'expression « sur la face interne » englobe en particulier l'application des membranes sur d'autres revêtements et couches déjà présentes sur ladite paroi, notamment toute sorte de matériaux d'isolation thermiques, par exemple à base de laine minérale.

On applique alors la membrane pare-vapeur en une position interne par rapport au matériau d'isolation thermique, de préférence en contact direct avec celui-ci.

La figure 2 montre, à titre d'exemple, l'évolution de la S_{d} (échelle logarithmique) en fonction du taux d'humidité moyen de l'atmosphère environnante, déterminée selon la norme EN ISO 12572 :2001, d'une membrane PA666/EVOH (O) selon l'invention (épaisseur 50 µm, PA666/EVOH 70/30, teneur en éthylène de l'EVOH utilisé : 38 % en moles ; motifs PA6/motifs PA66 85/15) en comparaison avec une membrane Vario (◇) de même épaisseur, constituée d'un PA6 homopolymère.

On peut constater qu'en atmosphère humide (75 % HR) les deux membranes présentent avantageusement une perméance à la vapeur d'eau élevée, c'est-à-dire leur épaisseur d'air équivalente est faible, de l'ordre de 0,2 à 0,3 m. A faible taux d'humidité relative (27,5 %), l'épaisseur d'air équivalente de la membrane selon l'invention (S_{d} = 12 m) est quatre fois plus élevée que celle de la membrane connue (S_{d} = 3 m). La membrane selon l'invention se distingue par ailleurs de la membrane connue par le fait que l'épaisseur d'air équivalent varie fortement sur un domaine de taux d'humidité très étroit, passant d'une valeur d'environ 0,2 pour 75 % HR à une valeur d'environ 2,7 pour 68 % HR.

## Revendications

1. Membrane pare-vapeur, destinée à être utilisée pour améliorer l'étanchéité à l'air d'un bâtiment ou d'une pièce, comprenant au moins une couche active présentant une perméabilité à la vapeur d'eau qui augmente avec l'humidité relative environnante, ladite couche active comprenant au moins 90 % en poids d'un mélange de copolymère éthylène-alcool vinylique (EVOH) et d'un copolyamide 6-6.6 (PA666) ayant une température de fusion inférieure à 210 °C, de préférence inférieure à 200 °C.

2. Membrane pare-vapeur selon la revendication 1, **caractérisée par le fait que** la couche active comprend au moins 95 %, de préférence au moins 98 % en poids de mélange d'EVOH et de PA666.

3. Membrane pare-vapeur selon la revendication précédente, **caractérisée par le fait que** la couche active est constituée d'un mélange d'EVOH et de PA666.

4. Membrane pare-vapeur selon l'une quelconque des revendications précédentes, **caractérisée par le fait que** le rapport en poids EVOH/PA666 est compris entre 10/90 et 90/10, de préférence entre 20/80 et 70/30, en particulier entre 30/70 et 50/50.

5. Membrane pare-vapeur selon l'une quelconque des revendications précédentes, **caractérisée par le fait qu'**elle ne comporte pas d'autres couches actives.

6. Membrane pare-vapeur selon l'une quelconque des revendications précédentes, **caractérisée par le fait que** la teneur en éthylène de l'EVOH est comprise entre 20 et 50 % en moles, de préférence entre 25 et 45 % en moles.

7. Membrane pare-vapeur selon l'une quelconque des revendications précédentes, **caractérisée par le fait que** le PA666 est un copolymère statistique comportant des motifs PA6 et des motifs PA66 et présentant un rapport molaire motifs PA6/motifs PA66 compris entre 97/3 et 50/50, de préférence entre 95/5 et 55/45, en particulier entre 90/10 et 60/40.

8. Membrane pare-vapeur selon l'une quelconque des revendications précédentes, **caractérisée par le fait que** la couche active ou l'ensemble des couches actives présente une épaisseur totale comprise entre 20 et 100 µm, de préférence entre 25 et 80 µm, en particulier entre 30 et 65 µm.

9. Membrane pare-vapeur selon l'une quelconque des revendications précédentes, **caractérisée par le fait qu'**elle comporte en outre une ou plusieurs couches de support ou de protection, éventuellement pelables.

10. Membrane pare-vapeur selon l'une quelconque des revendications précédentes, **caractérisée par le fait que** la couche active ou l'ensemble des couches actives représente au moins 40 % en poids, de préférence au moins 50 % en poids et en particulier au moins 60 % en poids de la membrane.

11. Procédé de fabrication d'une membrane pare-vapeur selon l'une quelconque des revendications précédentes, comprenant
- le chauffage et le malaxage, à une température comprise entre 200°C et 230°C, de préférence entre 205°C et 225 °C, d'EVOH et de PA666 jusqu'à obtention d'un mélange homogène de ces polymères, et
- le formage d'une membrane à partir du mélange homogène d'EVOH et de PA666 ainsi obtenu.

12. Procédé selon la revendication 11, **caractérisé par le fait que** le formage de la membrane se fait par extrusion, étirage mécanique, calandrage et/ou soufflage du mélange de polymères.

13. Procédé d'amélioration de l'étanchéité à l'air d'un bâtiment ou d'une pièce comprenant l'application d'une membrane pare-vapeur selon l'une quelconque des revendications 1 à 10 sur la face interne des parois dudit bâtiment ou de ladite pièce.

14. Procédé selon la revendication 13, **caractérisé par le fait que** l'on applique la membrane en une position interne par rapport au matériau d'isolation thermique, de préférence en contact direct avec celui-ci.

## Patentansprüche

1. Dampfbremse, dazu bestimmt für die Verbesserung der Luftdichtheit eines Gebäudes oder eines Raumes verwendet zu werden, aufweisend wenigstens eine aktive Schicht mit einer mit zunehmender relativer Umgebungsfeuchte ansteigenden Wasserdampfpermeabilität, wobei die aktive Schicht mindestens 90 Gew.-% einer Mischung eines Ethylen-Vinyl-Alkohols (EVOH) und eines Co-Polyamids 6-6.6 (PA666) mit einer Schmelztemperatur geringer als 210°C, vorzugsweise geringer als 200°C, enthält.

2. Dampfbremse nach Anspruch 1, **dadurch gekennzeichnet, dass** die aktive Schicht mindestens 95 Gew.-%, vorzugsweise zu mindestens 98 Gew.-% einer Mischung aus EVOH und PA666 enthält.

3. Dampfbremse nach dem vorhergehenden Anspruch, **dadurch gekennzeichnet, dass** die aktive Schicht aus einer Mischung von EVOH und PA666 besteht.

4. Dampfbremse nach einem der vorhergehenden Ansprüche, **dadurch gekennzeichnet, dass** das Gewichtsverhältnis von EVOH/PA666 zwischen 10/90 und 90/10, vorzugsweise zwischen 20/80 und 70/30, insbesondere zwischen 30/70 und 50/50 beträgt.

5. Dampfbremse nach einem der vorhergehenden Ansprüche, **dadurch gekennzeichnet, dass** sie keine weiteren aktiven Schichten aufweist.

6. Dampfbremse nach einem der vorhergehenden Ansprüche, **dadurch gekennzeichnet, dass** der Ethylengehalt des EVOH zwischen 20 und 50 Mol-%, vorzugsweise zwischen 25 und 45 Mol-% beträgt.

7. Dampfbremse nach einem der vorhergehenden Ansprüche, **dadurch gekennzeichnet, dass** das PA666 ein statistisches Copolymer zusammengesetzt aus PA6- und PA66-Einheiten ist und ein Molverhältnis von PA6-Einheiten/PA66-Einheiten zwischen 97/3 und 50/50, vorzugsweise zwischen 95/5 und 55/45, insbesondere zwischen 90/10 und 60/40 aufweist.

8. Dampfbremse nach einem der vorhergehenden Ansprüche, **dadurch gekennzeichnet, dass** die aktive Schicht oder die Gesamtheit der aktiven Schichten eine Gesamtdicke zwischen 20 und 100 µm, vorzugsweise zwischen 25 und 80 µm, insbesondere zwischen 30 und 65 µm aufweist.

9. Dampfbremse nach einem der vorhergehenden Ansprüche, **dadurch gekennzeichnet, dass** sie eine oder mehrere, ggf. abziehbare Verstärkungs- oder Schutzschichten aufweist.

10. Dampfbremse nach einem der vorhergehenden Ansprüche, **dadurch gekennzeichnet, dass** die aktive Schicht oder die Gesamtheit der aktiven Schichten mindestens 40 Gew.-%, vorzugsweise mindestens 50 Gew.-% und insbesondere mindestens 60 Gew.-% des Gewichts der Dampfbremse ausmachen.

11. Verfahren zur Herstellung einer Dampfbremse nach einem der vorhergehenden Ansprüche, aufweisend
- das Erwärmen auf eine Temperatur zwischen 200°C und 230°C, vorzugsweise zwischen 205°C und 225°C, und das Rühren bei einer solchen Temperatur von EVOH und PA666 bis zum Erhalt einer homogen Mischung dieser Polymere und
- das Formen einer Dampfbremse aus der somit erhaltenen homogenen Mischung von EVOH und PA666.

12. Verfahren nach Anspruch 11, **dadurch gekennzeichnet, dass** das Formen der Dampfbremse durch Extrusion, mechanisches Strecken, Kalandrieren und/oder Blasen der Polymermischung erfolgt.

13. Verfahren zur Verbesserung der Luftdichtheit eines Gebäudes oder eines Raumes aufweisend das Anbringen einer Dampfbremse nach einem der Ansprüche 1 bis 10 auf die Innenseite der Wände des Gebäudes oder des Raumes.

14. Verfahren nach Anspruch 13, **dadurch gekennzeichnet, dass** man die Dampfbremse innenseitig zu einem Dämmmaterial anordnet, vorzugsweise in direktem Kontakt mit diesem.

## Claims

1. A vapor retarder membrane, intended to be used for improving the airtightness of a building or of a room, comprising at least one active layer having a water vapor permeability which increases with the surrounding relative humidity, said active layer comprising at least 90% by weight of a blend of ethylene/vinyl alcohol (EVOH) copolymer and of a copolyamide 6-6.6 (PA666) having a melting point below 210°C, preferably below 200°C.

2. The vapor retarder membrane as claimed in claim 1, **characterized in that** the active layer comprises at least 95%, preferably at least 98%, by weight of blend of EVOH and of PA666.

3. The vapor retarder membrane as claimed in the preceding claim, **characterized in that** the active layer consists of a blend of EVOH and of PA666.

4. The vapor retarder membrane as claimed in any one of the preceding claims, **characterized in that** the EVOH/PA666 weight ratio is between 10/90 and 90/10, preferably between 20/80 and 70/30, in particular between 30/70 and 50/50.

5. The vapor retarder membrane as claimed in any one of the preceding claims, **characterized in that** it does not comprise other active layers.

6. The vapor retarder membrane as claimed in any one of the preceding claims, **characterized in that** the ethylene content of the EVOH is between 20 and 50 mol%, preferably between 25 and 45 mol%.

7. The vapor retarder membrane as claimed in any one of the preceding claims, **characterized in that** the PA666 is a random copolymer comprising PA6 units and PA66 units and having a PA6 unit/PA66 unit molar ratio of between 97/3 and 50/50, preferably between 95/5 and 55/45, in particular between 90/10 and 60/40.

8. The vapor retarder membrane as claimed in any one of the preceding claims, **characterized in that** the active layer or the assembly of active layers has a total thickness of between 20 and 100 µm, preferably between 25 and 80 µm, in particular between 30 and 65 µm.

9. The vapor retarder membrane as claimed in any one of the preceding claims, **characterized in that** it also comprises one or more support layers or protective layers which are optionally peelable.

10. The vapor retarder membrane as claimed in any one of the preceding claims, **characterized in that** the active layer or the assembly of active layers represents at least 40% by weight, preferably at least 50% by weight and in particular at least 60% by weight of the membrane.

11. A process for manufacturing a vapor retarder membrane as claimed in any one of the preceding claims, comprising
- the heating and kneading, at a temperature of between 200°C and 230°C, preferably between 205°C and 225°C, of EVOH and of PA666 until a homogeneous blend of these polymers is obtained, and
- the forming of a membrane from the homogenous blend of EVOH and of PA666 thus obtained.

12. The process as claimed in claim 11, **characterized in that** the forming of the membrane is carried out by extrusion, mechanical drawing, calendering and/or blow-molding of the polymer blend.

13. A process for improving the airtightness of a building or of a room, comprising the application of a vapor retarder membrane as claimed in any one of claims 1 to 10 to the internal face of the walls of said building or of said room.

14. The process as claimed in claim 13, **characterized in that** the membrane is applied in an internal position relative to the thermal insulation material, preferably in direct contact therewith.
